Europäisches Patentamt

European Patent Office

Office européen des brevets

(11) Veröffentlichungsnummer: **0 432 283 A1**

## EUROPÄISCHE PATENTANMELDUNG

(21) Anmeldenummer: 89122739.9

(51) Int. Cl.⁵ **H02K 5/22**, H02K 5/10

(22) Anmeldetag: 09.12.89

(43) Veröffentlichungstag der Anmeldung:
**19.06.91 Patentblatt 91/25**

(84) Benannte Vertragsstaaten:
**AT BE CH DE ES FR GB GR IT LI LU NL SE**

(71) Anmelder: SCHUNK Motorensysteme GmbH
**Industriepark 7**
**W-2875 Ganderkesee 1(DE)**

(72) Erfinder: **Köster, Walter**
**Neddenhüser Strasse 49**
**W-2875 Ganderkesee 1(DE)**

(74) Vertreter: Stoffregen, Hans-Herbert, Dr.
**Dipl.-Phys.**
**Patentanwälte Strasse & Stoffregen**
**Salzstrasse 11a Postfach 2144**
**W-6450 Hanau/Main 1(DE)**

(54) **Durchführung für elektrische Kabel.**

(57) Es wird eine Durchführung für elektrische Kabel (34) beschrieben, die in das Innere von feuchtigkeitsdicht zu verbindenden Gehäusen (10, 14) geführt werden. Die Dichtung (26) wird zwischen umlaufend flanschartig ausgebildeten Rändern (12, 16) der einander zugewandten Gehäuseöffnungen angeordnet, wobei die Kabel innerhalb der als Flachdichtung ausgebildeten Dichtung verlaufen.

FIG.1

# DURCHFÜHRUNG FÜR ELEKTRISCHE KABEL

Die Erfindung bezieht sich auf eine Durchführung für elektrische Kabel zwischen lösbar zusammensetzbaren Gehäusen zur Aufnahme eines Elektromotors und insbesondere eines Getriebes mit zwischen einander zugewandten Stirnflächen der Gehäuse verlaufender Dichtung aus zusammendrückbarem elektrischem Material.

Eine entsprechende Durchführung ist z.B. der EP-A-0 219 681 zu entnehmen. Für die Durchführung ist dabei ein an einer Dichtung angeformtes Teil vorgesehen, in dem die elektrischen Kabel eingespritzt bzw. einvulkanisiert sind. Das angeformte Teil wird durch eine konusförmige vom Stirnrand ausgehende Gehäusewandungsöffnung geführt, die in der Praxis durch Stanzen gewonnen wird. Dies bedeutet, daß ein Teil der Wandung geschnitten wird, um den Rest auszubrechen. Hierdurch ist eine gewisse Maßungenauigkeit in Kauf zu nehmen. Um eine hinreichende Dichtung zu erzielen, muß das angeformte Teil Dichtlippen aufweisen, die stets positionsgenau im Bereich der ausgestanzten Öffnung zu liegen kommen müssen. Dies ist insbesondere bei einer zumindest teilweise automatisierten Montage nicht gewährleistet, so daß Dichtungsprobleme auftreten. Diese können auch dadurch erwachsen, daß das verwendete gummiartige Material nicht die erforderlichen Rückstellkräfte aufweist, um bei Überprüfung im Klimaraum bei Temperaturen zwischen -40°C und +100°C einer bleibenden Verformung entgegenzuwirken, die bei nicht genauem Einsetzen in die Gehäusewandöffnung zu einer Undichtigkeit führt.

Aufgabe der vorliegenden Erfindung ist es unter anderem, eine Durchführung insbesondere für eine geschlossene Motor-Getriebe-Einheit der eingangs genannten Art so auszubilden, daß stets eine hinreichende Abdichtung erfolgt. Auch soll die Durchführung so gestaltet sein, daß eine Montagevereinfachung unabhängig davon erfolgt, welche Art von Kabeltypen und welche Anzahl zu verarbeiten sind.

Die Aufgabe wird im wesentlichen dadurch gelöst, daß die Kabel im Bereich der Stirnflächen vollständig innerhalb der beidseitig von den umlaufenden Stirnflächen druckbeaufschlagten Dichtung verläuft.

Durch die erfindungsgemäße Lehre wird folglich davon abgesehen, in der Gehäuseseitenwandung einen Ausschnitt vorzunehmen, durch den die Kabel zur Versorgung des Motors und gegebenenfalls weiterer elektrischer Bauelemente wie z.B. Drehzahlregler durchzuführen. Vielmehr werden die Kabel zwischen den flach aufeinanderdrückenden Stirnflächen der einander zugewandten offenen Gehäuse geführt, wobei sie vollständig in der Dichtung eingebettet sind. Die Kabel verlaufen also in der Flachdichtung selbst. Diese besteht vorzugsweise aus einem thermoplastisch verarbeitbaren Elastomer, insbesondere aus einem dynamisch vernetzten Polyolefinelastomer. Hierdurch bedingt weist die Dichtung die Vorzüge der wirtschaftlichen Kunststoffverarbeitung mit den charakteristischen Merkmalen von Gummiartikeln auf.

Um zu gewährleisten, daß eine Undichtigkeit nicht durch die Durchführung der elektrischen Kabel durch die Dichtung erfolgt, ist nach einem weiteren hervorzuhebenden Vorschlag der Erfindung vorgesehen, daß die Kabel innerhalb der Dichtung abisoliert und ggfls. verzinnt sind, um anschließend von dem Dichtungsmaterial umspritzt oder umgossen oder in anderer Weise umgeben zu werden.

Die Dichtung selbst, die zwischen den Randflächen der Gehäuse verläuft, ist mit einem Deckelteil verbunden, das seinerseits mit einem topfförmigen Träger für Kohlebürsten und elektrische Bauelemente verbindbar ist, der axial von einer Motorwelle durchsetzt wird, die sich bis in das andere Gehäuse fortsetzt, um z.B. mit einem Getriebe verbunden zu werden. Das Deckelteil weist demzufolge eine kreisförmige Durchbrechung auf, zu der diametral angeordnete Schachtbegrenzungen für die Kohlebürsten verlaufen.

Deckelteil und Dichtung können nach einem weiteren nachdrücklich zu unterstreichenden Vorschlag der Erfindung in einem Zweikomponenten-Spritzverfahren hergestellt werden, bei dem in einem Werkzeug zunächst das aus hartem Kunststoff bestehende Deckelteil und anschließend in einem zweiten Werkzeug auf diesem die aus elastischem Material bestehende Dichtung gespritzt wird.

Das Deckelteil selbst kann als integralen Bestandteil eine Aufnahme für insbesondere eine Drehzahlregelung aufweisen, die die Form eines Ringabschnitts aufweist und koaxial zu der Deckelteildurchbrechung und zwischen einander zugewandten Wandungen der Kohleschachtbegrenzungen verläuft.

Hierdurch bedingt besteht die Möglichkeit, daß die Variationsmöglichkeit der zu verwendenden Teile erhöht wird, da wahlweise ohne Verwendung unterschiedlicher Halbfertigteile eine Drehzahlregelung vorgesehen sein kann oder nicht. Zwar ist aufgrund der serienmäßigen Ausbildung des Deckelteils mit der Aufnahme für eine Drehzahlregelung herstellungsmäßig mit einem etwas größeren Materialverbrauch zu rechnen, der jedoch im Vergleich zu den Montagekosten, die sich ergeben würden, wenn wahlweise Deckelteile mit oder ohne Aufnahmen für Drehzahlregelungen in den Montageprozeß eingeführt werden müssen, vernachlässigbar ist.

Ein weiterer Lösungsvorschlag sieht vor, daß einer der Stirnränder der flach aufeinanderzudrükkenden Flächen der Gehäuse zwei parallel zueinander und vorzugsweise umlaufend ausgebildete Vorsprünge aufweist, zwischen denen ein umlaufender von der Dichtung ausgehender Vorsprung zu liegen kommt. Hierdurch wird eine Art Labyrinthdichtung zur Verfügung gestellt, durch die ergänzend mit gewährleistet wird, daß die zusammensetzbare Einheit aus den Gehäusen im erforderlichen Umfang feuchtigkeitsdicht ausgebildet ist. Gegebenenfalls können zumindest die von der einen Stirnfläche abragenden Vorsprünge im Bereich der Kabeldurchführung unterbrochen sein.

Nach einem eigenständigen Lösungsvorschlag ist vorgesehen, daß die Flachdichtung außenseitig, also außerhalb des Gehäuses als Steckerteil einer Steckvorrichtung ausgebildet ist. Da dieser Steckerteil -sei es ein Stecker, sei es eine Steckeraufnahme- von dem selben elastischen Material wie das der Dichtung umgeben ist, wird eine Wasserdichtheit im Bereich der Steckvorrichtung, also des späteren elektrischen Anschlusses erzielt, ohne daß grundsätzlich weitere Dichtelemente erforderlich sind. Die elektrisch leitenden Teile wie Stifte oder Buchsen des Steckerteils werden bei der Herstellung der Flachdichtung gleichzeitig mit dem Dichtungsmaterial umspritzt, so daß sich neben der gewünschten Dichtigkeit auch eine herstellungstechnische Vereinfachung ergibt. Wenn werkzeugmäßig eine Schnittstelle außerhalb des eigentlichen Dichtungsbereiches vorgesehen ist, können für den Steckerbereich unterschiedlichste Steckergeo metrien ohne Änderung des Basisteils verwendet werden. Das Basisteil ist dabei die zwischen den Gehäuseteilstirnflächen verlaufende Flachdichtung.

So besteht z.B. die Möglichkeit, daß die dem Motorgehäuse zuzuführenden Kabel -seien es die für die elektrische Versorgung des Motors oder ergänzende, z.B. für eine Drehzahlregelung-nicht fest mit den entsprechenden Motorteilen verbunden werden, sondern über eine Steckverbindung, wobei ein schnabel- oder im Schnitt U-förmiges Mutterteil innerhalb der Dichtung verlaufen und ein zungenförmig ausgebildetes männliches Teil von den zuzuführenden Kabelenden ausgehen kann.

Innerhalb des den Motor aufweisenden Gehäuses können von dem Deckelteil und/oder dem topfförmig ausgebildeten Träger trichterförmige Führungen für die elektrischen Kabel ausgehen. Der Zwischenraum zwischen dem Kabel und der Innenwandung der Führung ist dabei mit dem Dichtungsmaterial dann ausfüllbar, wenn die Kabel vollständig von dem Dichtungsmaterial in der zuvor beschriebenen Weise umschlossen werden, sei es also durch Spritzen, Giessen oder eine andere formgebende Behandlung des Materials.

Weitere Einzelheiten, Vorteile und Merkmale der Erfindung ergeben sich nicht nur aus den Ansprüchen, den diesen zu entnehmen den Merkmalen -für sich und oder in Kombination-, sondern auch aus der nachfolgenden Beschreibung von in der Zeichnung dargestellten bevorzugten Ausführungsbeispielen.

Es zeigen:

Fig. 1 Eine auseinandergezogene Darstellung von feuchtigkeitsdicht zu verbindenden Gehäusen mit in und zwischen diesen anzuordnenden Elementen,

Fig. 2 eine Draufsicht einer Dichtung mit Deckelteil,

Fig. 3 eine Unteransicht des Deckelteils und der Dichtung gemäß Fig. 2,

Fig. 4 eine Detaildarstellung einer Kabeldurchführung,

Fig. 5 einen Ausschnitt in vergrößerter Darstellung von einander zugeordneten Stirnflächen der Gehäuse nach Fig. 1 mit zwischenliegender Dichtung,

Fig. 6 eine erste Ausführungsform einer Steckverbindung,

Fig. 7 eine Draufsicht der Steckverbindung nach Fig. 6,

Fig. 8 eine weitere Ausführungsform eines Mutterteils einer Steckverbindung und

Fig. 9 bis 14 verschiedene Ausführungsformen in Drauf- und Seitenansicht von mit einem Steckerteil integral ausgebildeten Flachdichtungen.

In der nachfolgenden Beschreibung der Ausführungsbeispiele werden gleiche Elemente mit gleichen Bezugszeichen versehen.

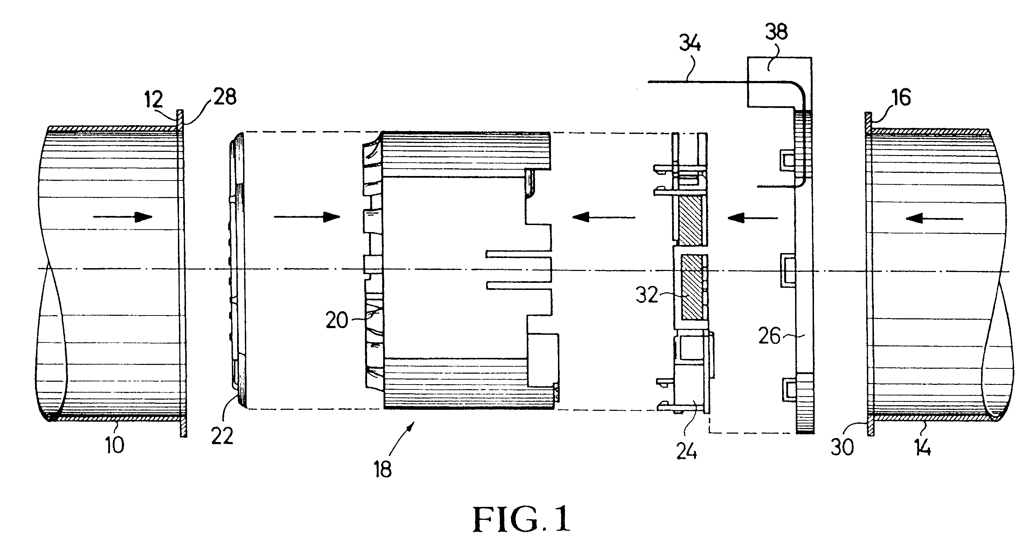

In Fig. 1 sind in auseinandergezogener Darstellung Teile von vorzugsweise einer Motor-Getriebe-Einheit dargestellt, die feuchtigkeitsdicht zu verbinden sind. Ein topfförmiges Gehäuse (10) mit einem flanschartig ausgebildeten Rand (12) ist dabei als Motorgehäuse ausgebildet, um zum Beispiel einen dauermagneterregten Kommutatormotor aufzunehmen. Das mit dem Motorgehäuse (10) zu verbindende vorzugsweise ein Getriebe aufnehmende Gehäuse (14) weist ebenfalls Topfform auf und ist mit einem flanschartigen Rand (16) versehen. Die Verbindung der Gehäuse (10) und (14) kann über nicht dargestellte Befestigungs elemente durch gegenseitige Verspannung in einer Art erfolgen, wie sie z.B. der EP-A-0 219 681 zu entnehmen ist. In dem Motorgehäuse (10) wird ein topf- oder becherförmiger Träger (18) aus Kunststoff angeordnet, dessen Bodenfläche (20) ein Gitter (22) aufnimmt, das vorzugsweise ein tiefgezogenes Teil ist. Durch diese Herstellungsart bedingt wird ein dreidimensionales Gitter zur Verfügung gestellt, das eine hohe Anzahl und Dichte von Leiterbahnen zur Verfügung stellt. Die zylindrische Wandung des Trägers (10) kann zumindest bereichsweise doppelwandig ausgebildet sein, um im wesentlichen konzentrisch zu einem von dem Träger (18) aufgenommenen Kommutator des Elektromotors elektrische und elektronische Bauelemente positionsgenau und dichtgepackt derart aufzunehmen, daß eine weitgehend automatische Bestückung erfolgt, so daß eine Automatenfertigung möglich wird.

Auf dem Träger (18) wird stirnseitig ein Deckelteil (24) über vorzugsweise Rastnasen festgerastet. Außenseitig ist das Deckelteil (14) mit einer Flachdichtung (26) versehen, die entweder rastend mit dem Deckelteil (24) verbunden ist oder aber vorzugsweise in einem Zweikomponenten-Spritzverfahren integral mit dem Deckelteil (24) ausgebildet ist. Das Deckelteil (24) kann ein Hartkunststoffteil sein, wohingegen die Dichtung (26) insbesondere ein dynamisch vernetztes Polyolefinelastomer ist. Die Dichtung (26) verläuft zwischen den flanschartigen Rändern (12) und (16), liegt also an den jeweiligen Stirnflächen (28) und (30) an und wird beim Verspannen der Gehäuse (10) und (14) in einem Umfang zusammengedrückt, daß eine hinreichende Dichtung zwischen den Gehäusen (10) und (14) gewährleistet ist.

Das Deckelteil (24) weist als integralen Bestandteil eine Aufnahme (32) für vorzugsweise eine Drehzahlregelung für den Elektromotor auf, um in Abhängigkeit von den Einsatzbedürfnissen mit den entsprechenden elektrischen und elektronischen Bauelementen bestückt zu werden oder nicht.

Die elektrischen, in das Innere des Gehäuses (10) zu führenden Kabel (34) zum Anschluß an die Kohlebürsten oder elektrische Bauelemente wie die Drehzahlregelung werden innerhalb des Materials der Dichtung (26) zwischen den Rändern (12) und (16) geführt, so daß es des nach dem Stand erforderlichen Ausschnitts in der Wandung des Motorgehäuses nicht bedarf. Mit anderen Worten werden die Kabel (34) im Material der Dichtung (26) geführt.

Um ein Abquetschen der Kabel (34) zu vermeiden, weist die Dichtung (26) eine hinreichende Stärke auf. So weist diese vorzugsweise eine Stärke auf, die 5 bis 10, vorzugsweise 6 bis 7 mal größer als der Durchmesser des stärksten elektrischen Kabels (34) ist. Beispielhaft kann die Stärke der scheibenförmigen Flachdichtung (26) 3 bis 3,5 mm betragen.

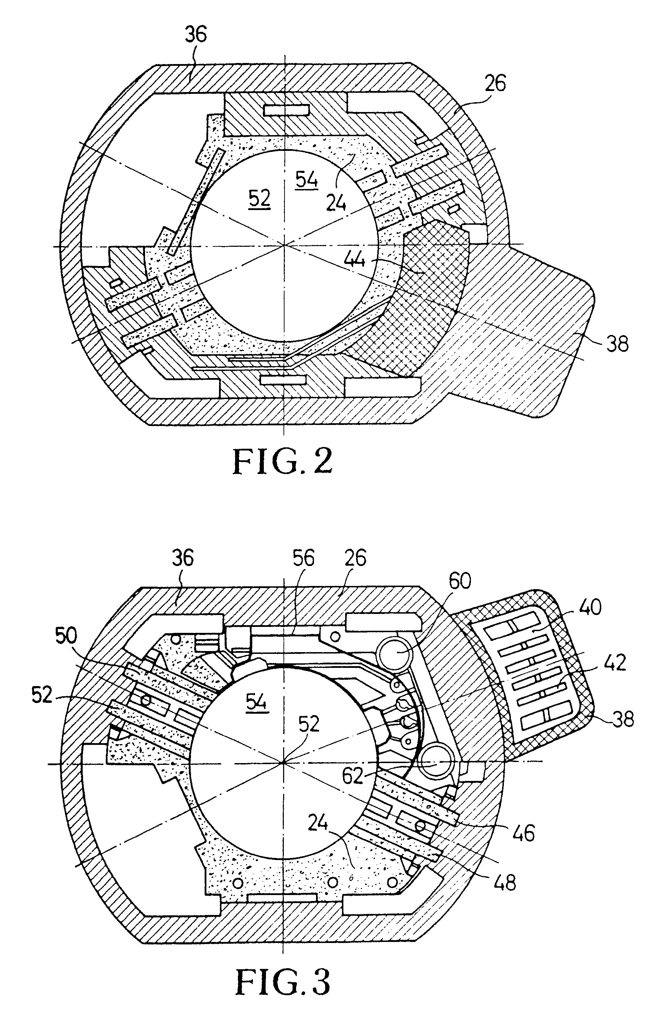

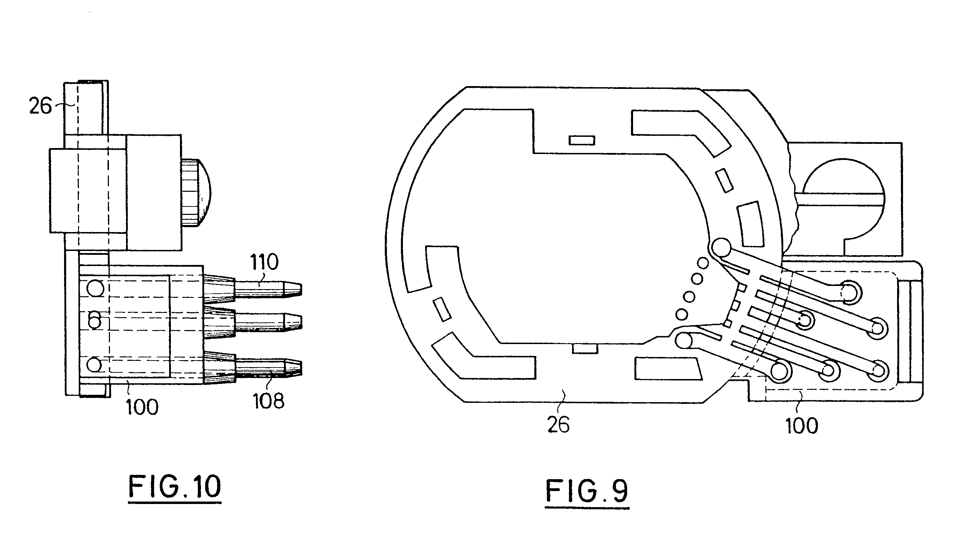

Einzelheiten der vorzugsweise im Zweikomponenten-Spritzverfahren hergestellten Dichtung (26) mit Deckelteil (24) sind z. B. den Fig. 2 und 3 zu entnehmen. Man erkennt, daß die Dichtung (26) einen umlaufenden Rand (36) aufweist, der zwischen den Stirnflächen (28) und (30) zu liegen kommt. Von einer der konvex ausgebildeten Schmalseiten geht ein fahnenartiger oder auch gegebenenfalls abgewinkelter, also im Schnitt I-förmiger entlang der Außenwandung des Gehäuses (10) verlaufender Abschnitt (38) aus, durch den die Kabel (34) geführt werden bzw. in dem ein Steckerteil einer Steckvorrichtung verläuft, wie es insbesondere den Fig. 9 bis 14 zu entnehmen ist.

Bei der Ausführungsform der Fig. 2 und 3 weist der Abschnitt (38) stegförmige und parallel zueinander verlaufende Wandungen auf, von denen zwei beispielhaft mit den Bezugszeichen (40) und (42) versehen sind. In dem Abschnitt (38) und innerhalb der Dichtung (26) werden dann die mit dem Motor und dessen Regelorganen verbundenen Kabel (34) gelegt, die in dem Bereich, in dem sie mit dem Dichtungsmaterial umgeben werden sollen, abisoliert und verzinnt sind. Sobald die Kabel richtig positioniert sind, kann durch Vergiessen, Ausspritzen oder sonstige Art ein Abdecken und Verschließen der für die Kabel vorhandenen Hohlräume in dem Abschnitt (38) bzw. den Durchtrittsbereichen der Dichtungen (26) mit dem Dichtungsmaterial erfolgen, um die gewünschte feuchtigkeitsdichte Durchführung der Kabel (34) durch die Dichtung (26) zwischen den Stirnflächen (28) und (30) sicherzustellen.

Im Bereich der Durchführung der Kabel (34) durch die Dichtung (26) kann gegebenenfalls die Materialstärke der Dichtung (26) verstärkt werden. Dieser Bereich ist in Fig. 2 durch eine Kreuzschraffur angedeutet und mit dem Bezugszeichen (44) versehen.

Das Deckelteil (26) ist entsprechend der Fig. 2 und 3 mit stegartigen als Führungen für Kohlebürsten dienende Wandungen (46), (48) bzw. (50) und (52) versehen, die diametral zur Achse (52) des nicht dargestellten Kommutators angeordnet sind.

Man erkennt desweiteren, daß das Deckelteil (24) eine kreisförmige Durchbrechung (54) aufweist, die von einer Welle durchsetzt ist, die in das Getriebegehäuse (14) hineinragt. Koaxial zur Durchbrechung (54) ist die in Fig. 1 mit dem Bezugszeichen (32) und in Fig. 3 durch die verstärkte Linie (56) angedeutete Aufnahme für eine Drehzahlregelung angeordnet. Die Aufnahme (32) ist dabei erwähnterweise zusammen mit dem Deckelteil (24) vorzugsweise im Spritzverfahren hergestellt.

Die in Fig. 3 durch Doppelkreise angedeuteten Durchbrüche (60) und (62) verlaufen vorzugsweise innerhalb des Trägers (18), um nicht dargestellte Kabel aufzunehmen, die mit den Kohlebürsten oder elektrischen bzw. elektronischen Bauelementen verbindbar sind. Der Zwischenraum zwischen dem Kabel und der Innenwandung der trichterförmig ausgebildeten Führungen (60) und (62) kann mit dem Dichtmaterial ausgefüllt werden, wenn die durch den Abschnitt (38) und den Bereich (44) geführten Kabel mit dem Material der Dichtung (26) abgedeckt bzw. die vorhandenen Freiräume ausgefüllt werden. Hierdurch ist eine zusätzliche Kabelabdichtung im Bereich des Trägers (18) gegeben.

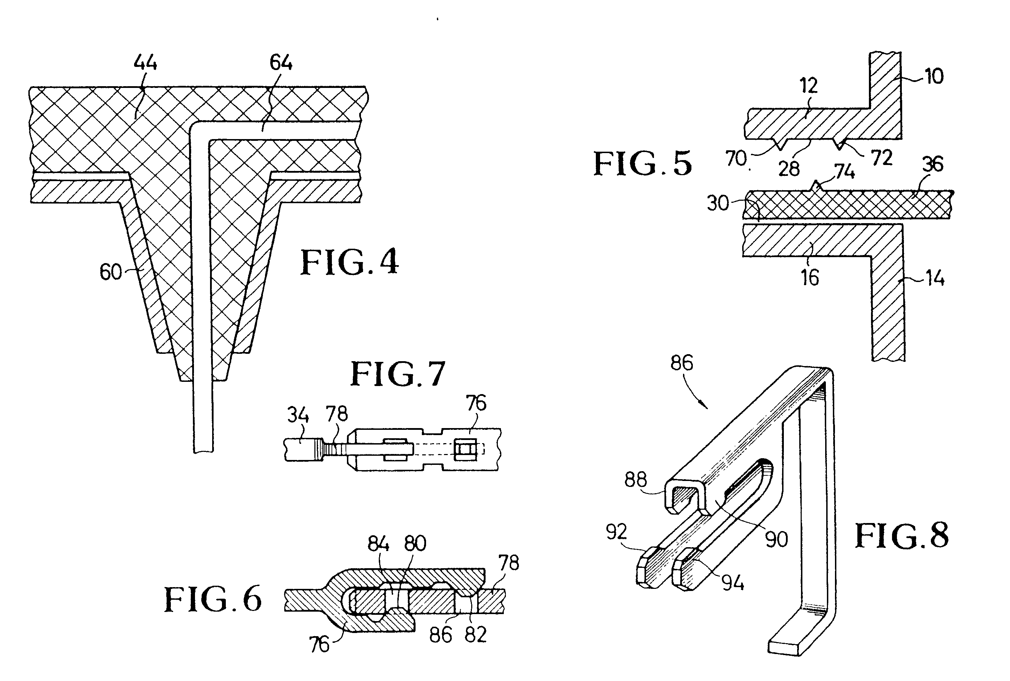

Dieses Merkmal ist auch der Fig. 4 zu entnehmen. Man erkennt die trichterförmig ausgebildete Wandung der Führung (60), durch die ein mit dem Bezugszeichen (64) versehenes Kabel geführt wird. Der Zwischenraum zwischen der Innenwandung der Führung (60) und dem Kabel (64) wird dann mit dem Material der Dichtung ausgefüllt. Dabei verläuft die Führung (60) im Ausführungsbeispiel nach den Fig. 2 und 3 in etwa im Bereich (44) der Dichtung (26).

In Fig. 5 ist eine besondere Ausgestaltung der Dichtung (26) im Bereich ihres Randes (36), also in dem Bereich dargestellt, der zwischen den Stirnflächen (30) und (28) der flanschartig ausgebildeten Ränder (12) und (16) der Gehäuse (10) und (14) verläuft. Die Stirnfläche (28) weist umlaufende gegebenenfalls im Bereich des Abschnitts (38) der Dichtung (26) unterbrochene Vorsprünge (70) und (72) auf, zwischen denen ein von der zugewandten Fläche des Randes (36) der Dichtung (26) ausgehender Vorsprung (74) zu liegen kommt. Werden nun die Gehäuse (10) und (14) und damit die Stirnflächen (28) und (30) flach aufeinandergedrückt, so bildet sich zwischen den Vorsprüngen (70), (74) und (72) eine Art Labyrinthdichtung aus, die zusätzlich gewährleistet, daß Feuchtigkeit in das Innere der Gehäuse (10) und (14) nicht eindringen kann.

Um die Montage erleichtern und einen weitgehend vollautomatischen Fertigungsablauf zu ermöglichen, kann vorgeshen werden, daß die mit dem Motor und den elektrischen Elementen zu verbindenden elektrischen Anschlüssen mit den von außen zuzuführenden Kabeln durch Steckerverbindungen verbunden werden.

So ist in den Fig. 6 bis 8 vorgesehen, daß für die elektrischen Anschlüsse innerhalb des Gehäuses (12) im Bereich der Dichtung, insbesondere im Bereich des entweder fahnenartig oder nach außen L-förmig ausgebildeten Abschnitts (38) vorzugsweise U-förmig ausgebildete Mutterstecker (76) verlaufen, in die zungenförmig ausgebildete Endabschnitte (78) der Kabel (34) einrastbar sind. Hierzu weisen die klauen- bzw. U-förmig ausgebildeten Schenkel des Mutterstückes (76) Vorsprünge (80) und (82) auf, die in entsprechende Aussparungen oder Vertiefungen (84) und (86) des Abschnitts (78) einrasten, um so eine sichere Verbindung herzustellen.

Eine alternative Ausführungsform des innerhalb der Dichtung (26) verlaufenden Mutterteils ist der Fig. 8 zu entnehmen. Man erkennt ein klauenartig ausgebildetes Mutterteil (86), in das ein nicht dargestellter zungenförmig ausgebildeter Endabschnitt eines Kabels einrastbar ist. Um ein sicheres Festlegen zu ermöglichen, weist jeder Schenkel des in Seitenansicht U-förmig ausgebildeten Mutterstücks (86) parallel zueinander verlaufende Vorsprünge (88), (90) bzw. (92), und (94) auf, die paarweise einander zugewandt sind und in entsprechende Vertiefungen oder Ausnehmungen eines zungenförmigen Vaterteils eines Kabels einrasten.

Den Fig. 9 bis 14 sind bevorzugte Weiterbildungen der erfindungsgemäßen Dichtung (26) in bezug auf die Stromdurchführung, also die elektrischen Verbindungskabel zu entnehmen.

So weisen die den Fig. 9 und 10 bzw. 11 und 12 bzw. 13 und 14 zu entnehmenden gleich aufgebauten Flachdichtungen (26) verschieden ausgebildete äußere Abschnitte (100), (102) und (104) auf, die der Funktion nach dem Abschnitt (38) der Fig. 2 und 3 entsprechen.

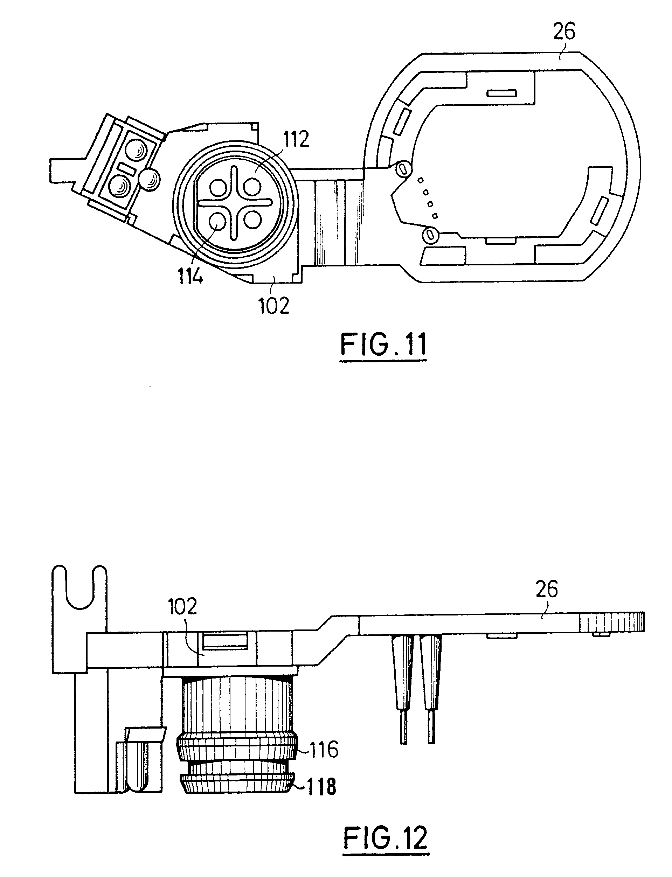

Die Abschnitte (100), (102) und (104) sind jedoch erfindungsgemäß als Steckerteil einer Steckvorrichtung ausgebildet, wobei das Steckerteil wahlweise als ein Stecker (Fig. 9, 10, 13, 14) oder als Steckeraufnahme (Fig. 11 und 12) ausgebildet sein kann.

So verlaufen in dem Ausführungsbeispiel der Fig. 9 und 10 Kontaktstifte (108) innerhalb des Abschnittes (100). Dieser Abschnitt (100) ist gleichzeitig mit der Flachdichtung (26) als Einheit hergestellt, so daß infolgedessen die Kontaktstifte (108) von dem Flachdichtungsmaterial zumindest teilweise umspritzt sind.

Die freien Enden (110) der Kontaktstifte (108) können nun in eine nicht dargestellte Steckeraufnahme eingebracht werden, um die erforderliche elektrische Verbindung herzustellen. Dabei kann die Steckeraufnahme in einem Umfang auf den Abschnitt (100) geschoben werden, daß sich eine Wasserdichtigkeit ergibt. Infolgedessen sind grundsätzlich weitere Dichtungsmaßnahmen nicht erforderlich.

Das Ausführungsbeispiel der Fig. 11 und 12 sieht als Steckerteil eine Steckeraufnahme (112) vor, die im Ausführungsbeispiel vier Steckerbuchsen (114) aufweist, in die nicht dargestellte Steckerstifte einbringbar sind.

Wie die Schnittdarstellung der Fig. 12 erkennen läßt, weist der Abschnitt (102) im Bereich der Steckerbuchsen (114) umlaufende wulstartige Abschnitte (116) und (118) auf, die in entsprechende ringförmige Aufnahmen des nicht dargestellten Steckerteils einrastbar sind, um so die gewünschte Dichtigkeit zu erzielen. Es wird folglich durch den Abschnitt (102) -wie durch den Abschnitt (100)- ein Steckeradapter zur Verfügung gestellt, der integral mit der Dichtung (26) ausgebildet ist und damit eine wasserdichte Verbindung zu einem nicht dargestellten Steckergegenteil ermöglicht, wobei die Verbindungsart zwischen den Steckerteilen in gewohnter Technik erfolgen kann.

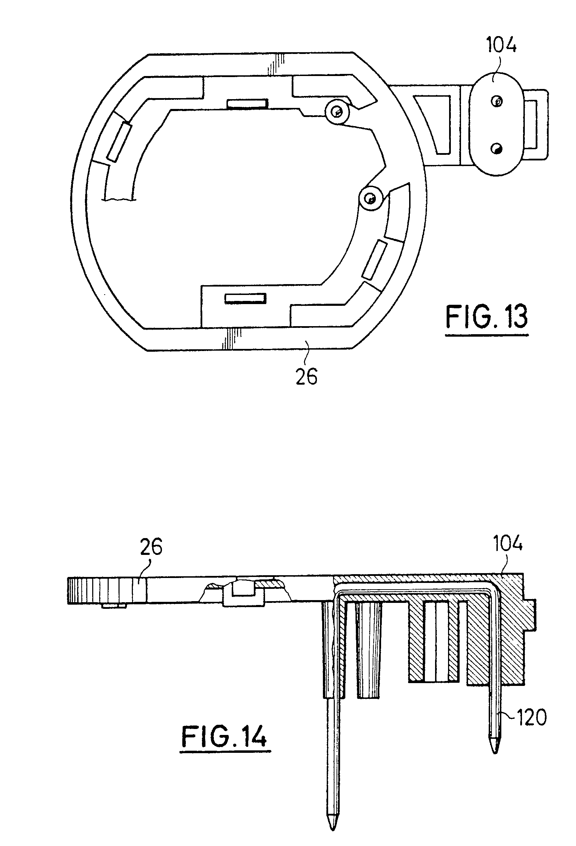

Das Ausführungsbeispiel der Fig. 13 und 14 sieht eine andere Ausgestaltung des integral mit der Flachdichtung (26) ausgebildeten Steckerteils (104) vor. So ist das Steckerteil (104) als Stecker ausgebildet, aus dem stiftförmig ausgebildete Kabelabschnitte (120) wie Stifte herausragen, die in eine entsprechend ausgebildete Steckeraufnahme einbringbar sind.

Ganz allgemein kann festgestellt werden, daß bei unveränderter Dichtung (26) als Basisteil und der in dieser verlaufenden elektrischen Verbindung die Dichtung selbst mit Steckerteilen unterschiedlicher Steckergeometrien ausgebildet sein kann, um so auf einfache Weise eine elektrische Verbindung mit entsprechend zugeordneten Steckerteilen herzustellen, wobei ohne zusätzliche Dichtelemente eine hinreichende Wasserdichtigkeit erzielt wird.

**Ansprüche**

1. Durchführung für elektrische Kabel (34) zwischen lösbar zusammensetzbaren Gehäusen (10, 14) zur Aufnahme eines Elektromotors und insbesondere eines Getriebes mit zwischen einander zugewandten Stirnflächen (28, 30) der Gehäuse verlaufender Dichtung (26) aus zusammendrückbarem elastischem Material,
**dadurch gekennzeichnet,**
daß die Kabel (34) im Bereich der Stirnflächen (28, 30) vollständig innerhalb der beidseitig von den umlaufenden Stirnflächen druckbeaufschlagten Dichtung (26) verlaufen.

2. Durchführung nach Anspruch 1,
**dadurch gekennzeichnet,**
daß die Kabel (34) innerhalb der Dichtung (26) abisoliert und vorzugsweise verzinnt sind.

3. Durchführung nach Anspruch 1,
**dadurch gekennzeichnet,**
daß die als Flachdichtung ausgebildete Dichtung (26), die vorzugsweise aus einem dynamisch vernetzten Polyolefinelastomer besteht, außerhalb des Gehäuses einen als Steckerteil (100, 102, 104) ausgebildeten Abschnitt einer Steckvorrichtung aufweist, wobei das Steckerteil als Stecker (100, 104) oder als Steckeraufnahme (102) ausgebildet ist.

4. Durchführung nach Anspruch 1,
**dadurch gekennzeichnet,**
daß die Kabel (34) gegebenenfalls nach Verbindung der Dichtung (26) mit einem aus Kunststoff bestehenden Deckelteil (24) eines topfförmigen Trägers (18) für Kohlebürsten und elektrische Bauelemente mit Material des Dichtungsmaterials vollständig umgeben wie z.B. umspritzt oder umgossen sind, wobei das Deckelteil (24) als Trägerteil für elektrische und/oder elektronische Komponenten wie einer Drehzahlregelung für den Elektromotor ausbildbar ist.

5. Durchführung nach Anspruch 1,
**dadurch gekennnzeichnet,**
daß die Dichtung (26) im zwischen den Stirnflächen (28, 30) verlaufenden Bereich (38) durch Stege (40, 42) getrennte, im Schnitt U-förmige Rinnen zur Aufnahme der durchzuführenden Kabel (34) aufweist.

6. Durchführung nach Anspruch 4,
**dadurch gekennzeichnet,**
daß das Deckelteil (26) eine in Draufsicht rechteckige Form mit konvex ausgebildeten gegebenenfalls Aussparungen aufweisenden Schmalseiten aufweist und mittig zur Durchführung einer Welle mit einer kreisförmigen Durchbrechung (54) versehen ist, daß abschnittsweise koaxial zur Durchbrechung eine Aufnahme (32) für die Drehzahlregelung verläuft und daß die Aufnahme (36) vorzugsweise die Form eines Ringabschnitts aufweist, der koaxial zu der Durchbrechung (54) verläuft.

7. Durchführung nach Anspruch 4,
**dadurch gekennzeichnet,**
daß das Deckelteil (24) mit der Dichtung (26) in einem Zweikomponenten-Spritzverfahren hergestellt ist und/oder daß das Deckelteil (24) und die Aufnahme (32) für die Drehzahlregelung in einem ein- oder mehrstufigen formgebenden Prozeß wie Spritzvorgang hergestellt sind.

8. Durchführung nach Anspruch 4,
**dadurch gekennzeichnet,**
daß von dem Deckelteil (26) oder dem Träger (18) trichterförmige sich in Richtung des Motors erstreckende als Kabelführungen dienende Abschnitte (60, 62) ausgehen, die nach eingebrachten Kabelabschnitten mit dem Material der Dichtung (26) ausgefüllt sind.

9. Durchführung nach Anspruch 1,
**dadurch gekennzeichnet,**
daß eine Stirnfläche (30) parallel zueinander und im wesentlichen umlaufende Vorsprünge (70, 72) und die Dichtung (26) einen in Richtung der Vorsprünge verlaufenden Vorsprung (74) aufweist, der bei zusammengesetzten Gehäusen (10, 40) zwischen ersteren verläuft.

10. Durchführung nach Anspruch 3,
**dadurch gekennzeichnet,**
daß in der Dichtung (26) ein vorzugsweise U-förmig ausgebildetes Muttersteckerteil (76, 86) angeordnet ist, in das zungenförmig ausgebildete Enden der von außen zuzuführenden Kabel (34) lösbar einbringbar sind und daß vorzugsweise die einander zugewandten Schenkel des Muttersteckerteils (76) Vorsprünge (80, 82) aufweisen, die in entsprechende Vertiefungen oder Durchbrüche (84, 86) des zungenförmig ausgebildeten Endes (78) einrasten.

FIG.1

FIG.2

FIG.3

EP 0 432 283 A1

FIG.4

FIG.5

FIG.7

FIG.6

FIG.8

FIG.9

FIG.10

**FIG.11**

**FIG.12**

104

FIG.13

26

26

104

FIG.14

120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-U-8908892 (ATLANTA-KABEL-STEINMUELLER) <br> * Seite 3, Zeilen 3 - 19 * <br> * Seite 4, Zeilen 10 - 12; Figur 6 * <br> --- | 1-3 | H02K5/22 <br> H02K5/10 |
| Y | EP-A-0213863 (THE SUPERIOR ELECTRIC COMPANY) <br> * Spalte 4, Zeile 51 - Spalte 5, Zeile 10; Figuren 4a, 4b * <br> --- | 1-3 | |
| A,D | EP-A-0219681 (SIEMENS) <br> * Zusammenfassung; Figuren 1-12 * <br> --- | 1 | |
| A | DE-A-3810960 (SCHUNK MOTORENSYSTEME) <br> * das ganze Dokument * <br> --- | 4, 6-8 | |
| A | FR-A-1551840 (COMPAGNIE ELECTRO-MECANIQUE) <br> * Seite 2, Absatz 1; Figuren 1-5 * <br> --- | 9 | |
| E | DE-A-3823404 (SCHUNK MOTORENSYSTEME) <br> * das ganze Dokument * <br> ----- | 1-10 | |

RECHERCHIERTE SACHGEBIETE (Int. Cl.5 )

H02K

Der vorliegende Recherchenbericht wurde für alle Patentansprüche erstellt

| Recherchenort | Abschlußdatum der Recherche | Prüfer |
|---|---|---|
| DEN HAAG | 08 AUGUST 1990 | ZANICHELLI F. |

EPO FORM 1503 03.82 (P0403)